# EUROPÄISCHE PATENTANMELDUNG

(11) **EP 2 030 761 A2**
(43) Veröffentlichungstag der Anmeldung: **04.03.2009**
(21) Anmeldenummer: 08013221.0
(22) Anmeldetag: 23.07.2008
(51) Int. Cl.: B29C 65/10

(54) **Vorrichtung zum automatischen Aneinanderfügen von Kunststoffbahnen**

(30) Priorität: 06.08.2007 DE 102007036872
(71) Anmelder: Bernstein, Doerte, 09224 Chemnitz - Gruena (DE)
(72) Erfinder: Bernstein, Dörte, 09224 Chemnitz-Grüna (DE); Wolfgang, Tobias, deceased (DE); Unterberg, Thomas, 09113 Chemnitz (DE)
(74) Vertreter: Schmidt, Ursula

(57) **Zusammenfassung**

Die Erfindung betrifft eine Vorrichtung zum automatischen Aneinanderfügen von Kunststofffoliebahnen, im Wesentlichen bestehend aus einem angetriebenen Fahrgestell, auf dem die Antriebselemente angeordnet sind und mit dem eine Schweißeinheit verbunden ist, die eine seitlich angeordnete vertikal verschwenkbare und horizontal verstellbare Heißluftdüse aufweist und wenigstens eins der Räder des Fahrgestells gleichzeitig als Andrückrolle für die auszuführende Schweißnaht dient.

Die erfindungsgemäße Aufgabe, die darin besteht die Vorrichtung so weiter zu bilden, dass ein automatisches Verschweißen der beiden Kunststofffoliebahnen über ihre gesamte Länge ohne Unterbrechung des Schweißvorganges auch bei nicht geradlinig verlaufenden Schweißnähten erfolgt, wird dadurch gelöst, dass auf dem Fahrgestell (1) wenigstens zwei computergesteuerte Antriebsmotoren (10, 11) derart angeordnet sind, dass zwei beidseitig des Fahrgestells (1) angeordnete Räder (2, 3) separat angetrieben werden und dass eine Sensoreinheit (12) mit wenigstens zwei abstandsweise zueinander angeordneten Sensoren (14, 15) derart ausgebildet ist, dass die Sensoren (14, 15) im Fügebereich der Kunststofffoliebahnen (8, 9) zwischen diesen in Fügerichtung unmittelbar vor der Heißluftdüse (7) angeordnet sind.

## Beschreibung

Die Erfindung betrifft eine Vorrichtung zum automatischen Aneinanderfügen von Kunststofffoliebahnen, im Wesentlichen bestehend aus einem angetriebenen Fahrgestell, auf dem die Antriebselemente angeordnet sind und mit dem eine Schweißeinheit verbunden ist, die eine seitlich angeordnete vertikal verschwenkbare und horizontal verstellbare Heißluftdüse aufweist und wenigstens eins der Räder des Fahrgestells gleichzeitig als Andrückrolle für die auszuführende Schweißnaht dient.

Vorrichtungen zum Verschweißen von flächigen Kunststoffmaterialien sind bereits bekannt. So beschreibt die EP 1 464 471 A1 ein Verfahren und eine Vorrichtung zum überlappenden Verschweißen von flächigen Kunststoffmaterialien mittels eines elektrisch beheizten Heizkeils, der auf die untere Materialbahn aufgesetzt und unter Druck über diese bewegt wird. Der Druck wird über einen Niederhalter mit einer Niederhalterrolle erzeugt, der auf die obere Materialbahn und auf den Heizkeil drückt. Geringfügige Unebenheiten unter der unteren Materialbahn können durch die schwimmende Lagerung des Heizkeils ausgeglichen werden.

Nachteilig ist, dass die Vorrichtung mittels einer Führungsschiene geführt werden muss und daher nur ein geradliniges Verbinden der Kunststofffoliebahnen möglich ist. Beliebige geometrische Konturen können nur von Hand verbunden werden.

Die gleichen Nachteile weist die EP 1 371 474 B1 auf, die einen Schweißautomat für flächige Kunststoffmaterialien offenbart, bei dem das Fahrgestell in Schweißstellung von der Antriebseinheit, einem starren Führungsrad, das im vorderen Bereich des Fahrgestells angeordnet ist und der Andrückeinrichtung getragen wird. Das Führungsrad ist dabei derart angeordnet, dass es beim Schweißen entlang der Kante des oberen Kunststoffmaterials auf dem unteren Kunststoffmaterial entlang läuft. Die Andrückrolle verläuft auf dem Schweißnahtbereich. Das Führungsrad soll das spurgetreue Verfolgen der Kante bewirken und damit die Qualität der Schweißnaht erhöhen.

Ohne Korrekturen der Schweißrichtung durch den Bediener des Schweißautomaten und damit Herbeiführen von Stillstandszeiten während der Schweißvorgänge sind nicht geradlinig verlaufende Schweißnähte jedoch nicht ausführbar.

Es ist deshalb Aufgabe der Erfindung, die Vorrichtung der eingangs genannten Art so weiter zu bilden, dass ein automatisches Verschweißen der beiden Kunststofffoliebahnen über ihre gesamte Länge ohne Unterbrechung des Schweißvorganges auch bei nicht geradlinig verlaufenden Schweißnähten erfolgt.

Erfindungsgemäß wird die Aufgabe dadurch gelöst, dass auf dem Fahrgestell wenigstens zwei computergesteuerte Antriebsmotoren derart angeordnet sind, dass zwei beidseitig des Fahrgestells angeordnete Räder separat angetrieben werden und dass eine Sensoreinheit mit wenigstens zwei abstandsweise zueinander angeordneten Sensoren derart ausgebildet ist, dass die Sensoren im Fügebereich der Kunststofffoliebahnen zwischen diesen in Fügerichtung unmittelbar vor der Heißluftdüse angeordnet sind.

Mit dieser erfindungsgemäßen Vorrichtung wird erreicht, dass das Verschweißen der Ränder zweier Kunststofffoliebahnen völlig automatisch ablaufen kann. Die Sensoren überwachen den Ist-Zustand des Verlaufs der Herstellung der Verbindung und korrigieren die Schweißnahtrichtung, auch sobald sich Richtungsänderungen einstellen.

Nach einer vorzugsweisen Ausführung der erfindungsgemäßen Lösung werden die Kunststofffoliebahnen überlappend miteinander verbunden.

Damit wird die feste Verbindung beider Bahnen miteinander gewährleistet.

Nach einer anderen Ausführungsform werden die Kunststofffoliebahnen aneinander geschweißt.

Für bestimmte Einsatzfälle ist eine Rand-an-Rand-Verbindung der beiden Kunststofffoliebahnen zumindest aus ästhetischer Sicht von Vorteil.

Konstruktiv von Vorteil und kostengünstig ist es, wenn die Antriebsmotoren als Schrittmotoren ausgebildet sind.

Dabei ist jeder Schrittmotor mittels einer Welle mit dem jeweiligen Rad verbunden, so dass beide Räder unabhängig voneinander angetrieben werden können.

Nach einer einfachen und kostengünstigen Ausführungsform der erfindungsgemäßen Lösung sind die Sensoren auf optoelektronischer Basis im Infrarotbereich ausgebildet.

Zur genauen Erfassung des Verbindungsbereiches sind gegenüberliegende Infrarot-Sonden angeordnet und auf die Lageposition der Verbindungsbereiche oder Verbindungsränder der Kunststofffoliebahnen ausgerichtet.

Nach einer weiteren vorzugsweisen Ausführung der erfindungsgemäßen Lösung sind Prozessparameter und Ansprechverhalten Infrarot-Empfänger an das jeweils zu verschweißende Material anpassbar.

Damit wird der automatische Verfahrensablauf bei positionsgenauer Herstellung der Verbindung zwischen beiden Kunststofffoliebahnen gewährleistet, da jede Richtungsänderung während des Verschweißvorganges ohne Unterbrechung des Vorganges berücksichtigt und die Vorrichtung exakt entlang der zu verbindenden Ränder der Kunststofffoliebahnen verfahren werden kann.

Eine weitere vorteilhafte Ausbildung der erfindungsgemäßen Vorrichtung sieht vor, dass ein dritter Antriebsmotor auf dem Fahrgestell angeordnet ist, der mittels der Sensorik so angesteuert wird, dass mit Beendigung des Fügevorganges die Vorschubbewegung der Vorrichtung gestoppt und die Heißluftdüse in Ausgangsstellung geschwenkt wird.

Damit wird erreicht, dass der Verschweißvorgang mit Erreichen der Kunststofffoliebahnenden automatisch beendet wird und die Vorrichtung zum Stillstand kommt.

Die Erfindung soll nachfolgend anhand eines Ausführungsbeispieles näher erläutert werden. Die zugehörige Zeichnung zeigt dabei in
- Fig. 1: die erfindungsgemäße Vorrichtung in prinzipieller Darstellung,
- Fig. 2: die Vorrichtung nach Fig. 1 als Rückansicht in Arbeitsstellung der Heißluftdüse,
- Fig. 3: die Vorrichtung nach Fig. 1 in Ausgangs- und Endstellung der Heißluftdüse,
- Fig. 4: die Sensoreinheit in Schweißstellung als schematische Darstellung und in Seitenansicht und
- Fig. 5: eine schematische Darstellung des Schweißvorganges.

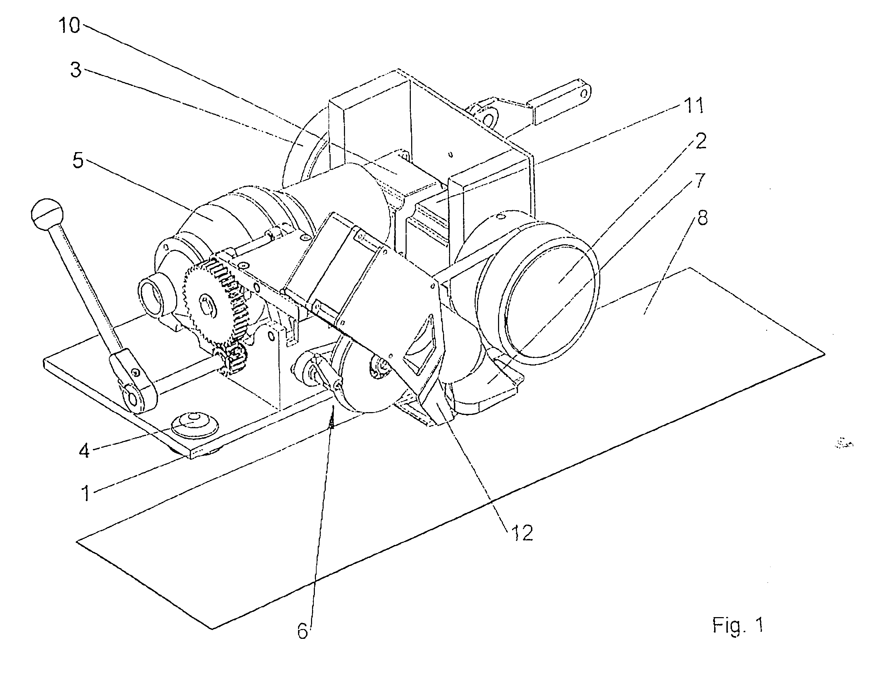

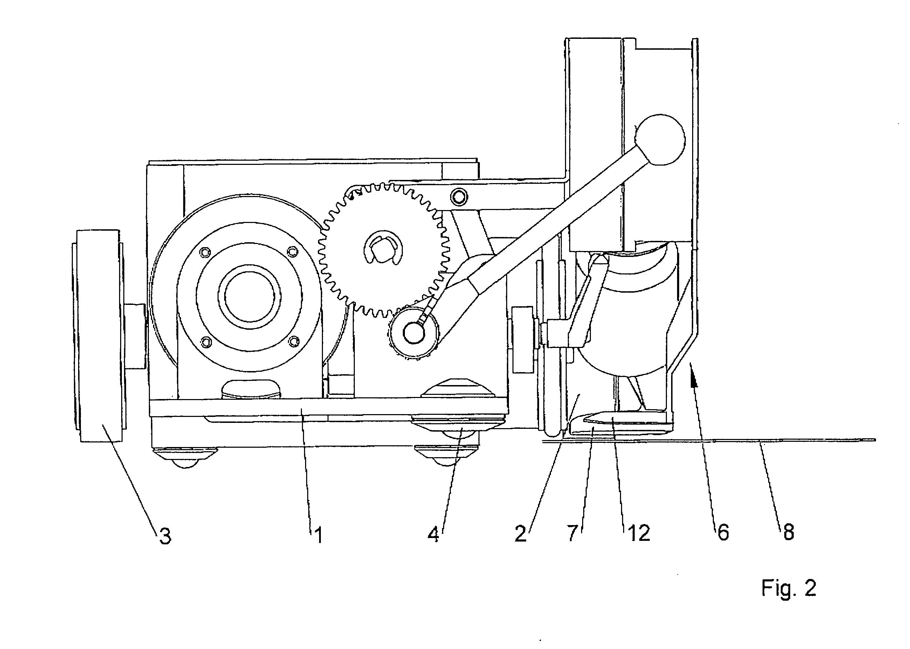

Die Figuren 1 bis 3 zeigen eine Vorrichtung zum Verschweißen von Kunstofffoliebahnen unterschiedlicher Länge, unterschiedlicher Dicke und unterschiedlicher Qualität. Soweit diese Vorrichtung bereits in EP 1 371 474 B1 ausführlich beschrieben ist, wird hier darauf verzichtet, den Aufbau der Vorrichtung und das Verfahren zum Ausführen der Schweißnaht zu beschreiben. Eingegangen werden soll jedoch auf die erfindungsgemäßen Änderungen an der in der EP 1 371 474 B1 beschriebenen Lösung.

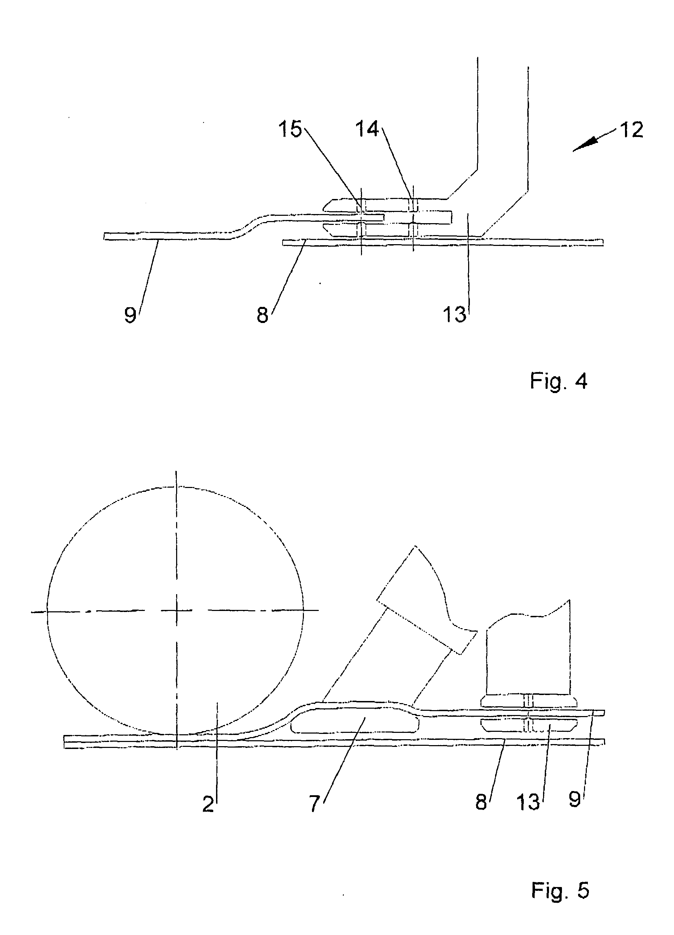

Im Wesentlichen besteht die Vorrichtung - wie in der oben angegebenen EP-Schrift - aus dem Fahrgestell 1, das zwei hintere Räder 2, 3 und ein vorderes Rad 4, dass als Stützrad dient, aufweist, einen Lufterzeuger 5 zur Bereitstellung des notwendigen Luftstromes für die Schweißeinrichtung 6 und der Schweißeinrichtung 6, die eine seitlich des Fahrgestells 1 angeordnete vertikal und horizontal verstellbare Heißluftdüse 7 aufweist. Die Heißluftdüse 7 ist in Verbindungsrichtung der beiden Kunststofffoliebahnen 8, 9 unmittelbar vor dem hinteren Rad 2 angeordnet, das als Andrückrolle - siehe Fig. 5 - nach unmittelbarer Ausführung des Schweißvorganges dient.

Das nahezu vollkommen automatische Ausführen der Schweißnaht, ob im überlappenden Zustand der Randbereiche der beiden zu verschweißenden Kunststofffoliebahnen 8, 9 oder aneinanderliegend, wird dadurch ermöglicht, dass auf dem Fahrgestell 1, zwei Antriebsmotoren 10, 11, im Ausführungsbeispiel als Schrittmotoren ausgebildet, angeordnet sind, die die Räder 2, 3 so antreiben und die Fahrtrichtung der Vorrichtung einstellen, dass die genaue Nahtführung eingehalten wird. Dazu sind die Schrittmotoren 10, 11 über jeweils eine Welle - in der Zeichnung nicht sichtbar - mit einem der Räder 2, 3 verbunden. Das vordere Rad 4 dient lediglich der Lagefixierung des Fahrgestells 1.

Zum Abtasten und Einstellen der genauen Schweißrichtung ist - wie in den Fig. 4 und 5 dargestellt - die Sensoreinheit 12 angeordnet, die ebenfalls seitlich des Fahrgestells 1 befestigt ist und deren Sensorhalter 13 mit zwei Sensoren 14, 15, in Form von Infrarot-Sonden ausgestattet ist, die in entgegengesetzter Ausrichtung angeordnet sind. Das heißt, einer der Sensoren 14 oder 15 tastet den Randbereich der unteren Kunststofffolienbahn 8 und der andere Sensor 15 oder 14 ist nach oben gerichtet, um den Randbereich der oberen Kunststofffoliebahn 9 zu erfassen. Die Sensoren 14, 15 sind zwischen den beiden Kunststofffoliebahnen 8, 9 angeordnet, ebenso verfährt die Heißluftdüse 7 zwischen beiden Kunststofffoliebahnen 8, 9 zum Verschweißen entlang der Ränder. Die unmittelbar nachfolgende Andrückrolle, das hintere Rad 2, sorgt dafür, dass die Naht qualitätsgerecht, ohne Verwerfungen oder Falten ausgeführt wird.

Die erfassten Positionen der Ränder der beiden Kunststofffoliebahnen 8, 9 werden von einem Computer, der auf dem Fahrgestell 1 angeordnet ist - in der Zeichnung nicht dargestellt - übernommen, der die Daten auswertet und die Schrittmotoren 10, 11 entsprechend ansteuert, die die Räder 2, 3 über die Wellen in die jeweilig notwendige Position verbringt.

In Abhängigkeit von dem zu verschweißenden Material und der Art, wie verschweißt werden soll, ist es möglich, den Abstand zwischen den Sensoren 14, 15, den Abstand der Sensoren 14, 15 zur Heißluftdüse 7 und den Abstand des als Andrückrolle fungierenden Rades 2 vor Ausführung des Verschweißens beider Kunststofffoliebahnen genau einzustellen. Das geschieht ebenfalls über die Sensorik in Verbindung mit der Berechnung und Auswertung mittels Computer, der in der Abdeckung des Fahrgestells 1 angeordnet ist.

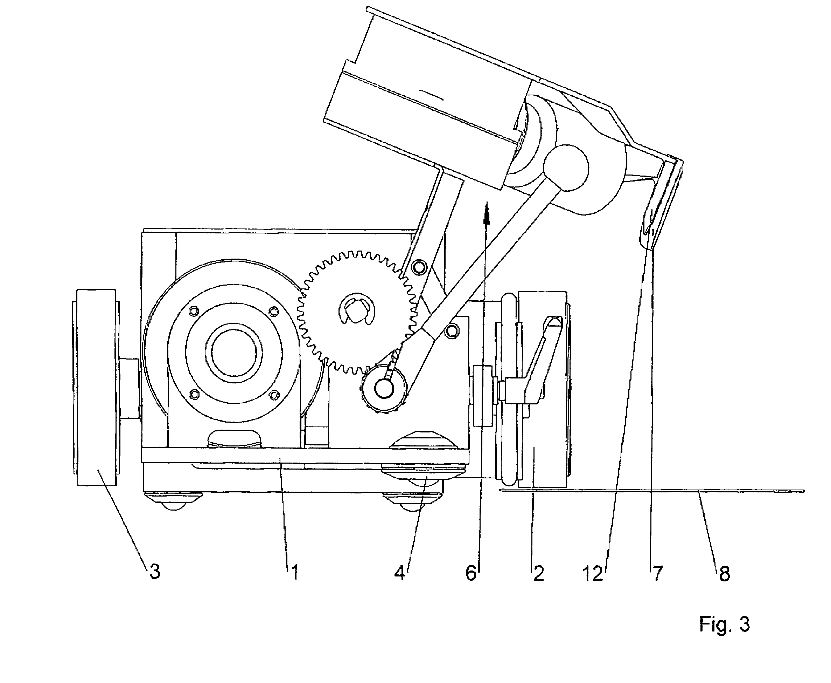

Um zu gewährleisten, dass die Vorrichtung nach Beendigung des Verbindungsvorganges in einen Stand-by-Zustand versetzt wird, ist vorgesehen, dass auf dem Fahrgestell 1 ein dritter Schrittmotor - in der Zeichnung nicht dargestellt- angeordnet wird, der ebenfalls mit der Sensorik über den Computer in Wirkverbindung steht und nach dem Erreichen des Endes der auszuführenden Schweißnaht die anderen Schrittmotoren 10, 11 stoppt, die Heißluftdüse 7 ausschwenkt und in Ausgangsstellung bringt und den Verfahrensablauf abbricht. Die Ausgangs- bzw. Endstellung ist der Heißluftdüse 7 bzw. der Schweißeinrichtung ist in Fig. 3 gezeigt.

Die Beendigung des Verfahrens kann selbstverständlich auch vom Bediener der Vorrichtung per Hand durchgeführt werden.

### Bezugszeichenliste

- 1: Fahrgestell
- 2: Rad
- 3: Rad
- 4: vorderes Rad
- 5: Lufterzeuger
- 6: Schweißeinrichtung
- 7: Heißluftdüse
- 8: untere Kunststofffoliebahn
- 9: obere Kunststofffoliebahn
- 10: Antriebsmotor, Schrittmotor
- 11: Antriebsmotor, Schrittmotor
- 12: Sensoreinheit
- 13: Sensorhalter
- 14: Sensor
- 15: Sensor

## Patentansprüche

1. Vorrichtung zum automatischen Aneinanderfügen von Kunststofffoliebahnen, im Wesentlichen bestehend aus einem angetriebenen Fahrgestell, auf dem die Antriebselemente angeordnet sind und mit dem eine Schweißeinheit verbunden ist, die eine seitlich angeordnete vertikal verschwenkbare und horizontal verstellbare Heißluftdüse aufweist und wenigstens eins der Räder des Fahrgestells gleichzeitig als Andrückrolle für die auszuführende Schweißnaht dient, **dadurch gekennzeichnet, dass** auf dem Fahrgestell (1) wenigstens zwei computergesteuerte Antriebsmotoren (10, 11) derart angeordnet sind, dass zwei beidseitig des Fahrgestells (1) angeordnete Räder (2, 3) separat angetrieben werden und dass eine Sensoreinheit (12) mit wenigstens zwei abstandsweise zueinander angeordneten Sensoren (14, 15) derart ausgebildet ist, dass die Sensoren (14, 15) im Fügebereich der Kunststofffoliebahnen (8, 9) zwischen diesen in Fügerichtung unmittelbar vor der Heißluftdüse (7) angeordnet sind.

2. Vorrichtung nach Anspruch 1, **dadurch gekennzeichnet, dass** die Kunststofffoliebahnen (8, 9) überlappend miteinander verbindbar sind.

3. Vorrichtung nach Anspruch 1, **dadurch gekennzeichnet, dass** die Kunststofffoliebahnen (8, 9) aneinander schweißbar ausgebildet sind.

4. Vorrichtung nach Anspruch 1 bis 3, **dadurch gekennzeichnet, dass** die Antriebsmotoren (10, 11) als Schrittmotoren ausgebildet sind.

5. Vorrichtung nach Anspruch 1 und 4, **dadurch gekennzeichnet, dass** jeder Schrittmotor (10, 11) mittels einer Welle mit dem jeweiligen Rad (2 oder 3) verbunden ist.

6. Vorrichtung nach Anspruch 1 bis 5, **dadurch gekennzeichnet, dass** die Sensoren (14, 15) als Infrarot-Sender und Infrarot-Empfänger ausgebildet sind.

7. Vorrichtung nach Anspruch 6, **dadurch gekennzeichnet, dass** sich gegenüberliegende Infrarot-Sender und Infrarot-Empfänger angeordnet sind, die auf die Lageposition der Verbindungsbereiche oder Verbindungsränder der Kunststofffoliebahnen (8, 9) ausgerichtet sind.

8. Vorrichtung nach Anspruch 1 und wenigstens einem der Ansprüche 2 bis 7, **dadurch gekennzeichnet, dass** der Abstand der Sensoren zueinander einstellbar ist.

9. Vorrichtung nach Anspruch 1 und wenigstens einem der Ansprüche 2 bis 8, **dadurch gekennzeichnet, dass** die Pro-zessparameter der Sensoren computergesteuert und angepasst an das jeweils zu verschweißende Material einstellbar sind.

10. Vorrichtung nach Anspruch 1 und wenigstens einem der Ansprüche 2 bis 9, **dadurch gekennzeichnet, dass** ein dritter Antriebsmotor auf dem Fahrgestell (1) angeordnet ist, der mittels der Sensorik (14, 15) so angesteuert wird, dass mit Beendigung des Fügevorganges die Vorschubbewegung der Vorrichtung unterbrochen und die Heißluftdüse (7) in Ausgangsstellung geschwenkt wird.
